# EUROPÄISCHE PATENTSCHRIFT

(11) **EP 3 221 324 B1**
(45) Veröffentlichungstag und Bekanntmachung des Hinweises auf die Patenterteilung: **01.05.2019**
(21) Anmeldenummer: 15786984.3
(22) Anmeldetag: 29.10.2015
(51) Int. Cl.: B01J 31/02, C07F 7/18

(54) **HERSTELLUNG VON ISOCYANATFUNKTIONELLEN ORGANOSILANEN**
PRODUCTION OF ISOCYANATE FUNCTIONAL ORGANOSILANES
PRÉPARATION D'ORGANOSILANES À FONCTIONNALITÉ ISOCYANATE

(30) Priorität: 21.11.2014 DE 102014223823
(43) Veröffentlichungstag der Anmeldung: 27.09.2017
(73) Patentinhaber: Wacker Chemie AG, 81737 München (DE)
(72) Erfinder: STANJEK, Volker, 84539 Ampfing (DE); ZANDER, Lars, 84503 Altötting (DE)
(74) Vertreter: Fritz, Helmut
(86) Internationale Anmeldenummer: PCT/EP2015/075139
(87) Internationale Veröffentlichungsnummer: WO 2016/078891

(56) Entgegenhaltungen:
- EP-A1- 0 583 581
- WO-A1-2016/010900
- JP-A- 2008 001 613

## Beschreibung

Die Erfindung betrifft ein Verfahren zur Herstellung von isocyanatfunktionellen Organosilanen.

Aus dem Stand der Technik sind verschiedene Verfahren zur Herstellung isocyanatfunktionellen Organosilanen, wie z.B. 3-Isocyanatopropylsilanen der Formel (1), bekannt. Geeignete Verfahren sind u.a. in EP 0 649 850 B1, EP 0 870 769 B1 oder EP 2 097 426 B1 beschrieben.

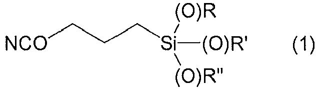

Bei all diesen Verfahren werden die isocyanatfunktionellen Organosilane durch eine thermolytische Alkoholabspaltung aus den jeweils korrespondierenden Carbamatoalkylsilanen, wie z.B. 3-Carbamatopropylsilanen der Formel (2), hergestellt.

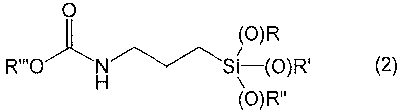

Die Carbamatoalkylsilane wiederum werden meist ausgehend von Aminoalkylsilanen, wie z.B. 3-Aminopropylsilanen der Formel (3), hergestellt.

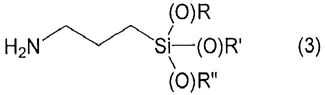

Dabei werden die Aminoalkylsilane unter stark basischer Katalyse - vorzugsweise mit Natrium- oder Kaliumalkoholanten - mit Dialkylcarbonaten unter Abspaltung eines Alkohols zu den jeweiligen Carbamatoalkylsilanen umgesetzt. Derartige Verfahren sind beispielsweise in EP 0 583 581, US 6,673,954 oder EP 1 937 697 beschrieben. In JP 20080001613 A wird als basischer Katalysator ein Fettsäuresalz eingesetzt.

Nach Beendigung der Reaktion wird der basische Katalysator meist neutralisiert, wahlweise mit organischen Säuren, wie in EP 0 583 581 B1 oder US 6,673,954 B1 empfohlen, oder entsprechend der Lehre von EP 1 937 697 B1 mit Ammoniumhalogeniden, Chlorsilanen oder organischen Halogenverbindungen. In JP 20080001613 A wird zur Neutralisation Salzsäure beschrieben. Die bei der Neutralisation entstehenden Salze werden vorzugsweise durch Fitration entfernt.

Allerdings besitzen die Verfahren, wie sie sich aus dem Stand der Technik herleiten lassen, den entscheidenden Nachteil, dass die nach den oben genannten Verfahren hergestellten Carbamatoalkylsilane nicht bzw. nur bedingt geeignet sind, um ohne gesonderte destillative Aufreinigung durch die oben beschriebene thermische Alkoholabspaltung zu Isocyanatoalkylsilanen weiterverarbeitet zu werden.

Gleichzeitig sind Carbamatoalkylsilane nur ausgesprochen schlecht destillierbar, da sie zum einen sehr schwerflüchtig und zum anderen thermisch nur mäßig stabil sind. Eine Destillation ist daher nur durch eine technisch aufwändige Destillation bei extrem gutem Vakuum mittels eines Dünnschicht- oder Kurzwegverdampfers möglich. Daher wäre es wünschenswert, auf eine gesonderte destillative Aufreinigung dieses Produktes verzichten zu können.

Werden nun Carbamatosilane, welche durch Verfahren entsprechend des Standes der Technik ohne gesonderte destillative Aufreinigung hergestellt wurden, zur Herstellung von Isocyanatosilanen eingesetzt, kommt es zu einer verstärkten Bildung von schwerflüchtigen, zum Teil sogar festen Nebenprodukten. Dies kann zum einen die Ausbeute der gewünschten isocyanatfunktionellen Silane entsprechend verringern und zum anderen auch den Herstellprozess empfindlich stören, z.B. durch die Bildung von Ablagerungen in dem entsprechenden Reaktor.

Vor allem aber weisen die entsprechend hergestellten isocyanatfunktionellen Silane eine relativ geringe Lagerstabilität auf, die oftmals nur in der Größenordnung von einigen Tagen bzw. maximal wenigen Wochen liegt.

Wünschenswert wäre daher ein Verfahren, das diese Nachteile nicht mehr aufweist.

Die nachveröffentlichte WO2016010900 beschreibt ein Verfahren zur Herstellung von Isocyanatoorganosilanen, bei dem Dialkylcarbonat aus Carbamatoorganosilanen und Aminoorganosilan hergestellt wird und in Gegenwart eines Metallakoholats hergestellt wurden und bei dem das Metallakoholat vor der Herstellung der Isocyanatoorganosilane mit Salzsäure (S) neutralisiert wird.

Gegenstand der Erfindung ist ein Verfahren zur Herstellung von Isocyanatoorganosilanen (IS) der allgemeinen Formel (4)

OCN-R²-SiR³₍₃₋ₓ₎(OR⁴)ₓ (4),

ausgehend von Carbamatoorganosilanen (CS) der allgemeinen Formel (5) 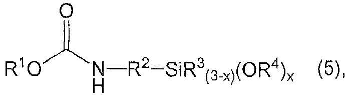 bei dem Carbamatoorganosilane (CS) eingesetzt werden, die durch Umsetzung von mindestens einem Aminoorganosilan (AS) der allgemeinen Formel (6),

NH₂-R²-SiR³₍₃₋ₓ₎(OR⁴)ₓ (6),

mit mindestens einem Dialkylcarbonat (DAC) der allgemeinen Formel (7), 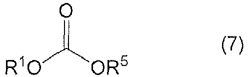 in Gegenwart eines basische Funktionen aufweisenden basischen Katalysators (K), der ein Metallalkoholat ist, hergestellt wurden, wobei der basische Katalysator (K) vor der Herstellung der Isocyanatoorganosilane (IS) vollständig oder teilweise mit einer Säure (S) neutralisiert wurde, deren sämtliche Protolysenstufen pKₛ-Werte von maximal 4,0 aufweisen, wobei die Säure ausgewählt wird aus Chlorwasserstoff, schwefelhaltigen Säuren, Salpetriger Säure und Salpetersäure,
wobei
- R¹, R³, R⁴ und R⁵: gleich oder verschieden sein können und jeweils einen einwertigen, unsubstituierten oder substituierten Kohlenwasserstoffrest darstellen,
- R²: einen zweiwertigen, unsubstituierten oder substituierten Kohlenwasserstoffrest darstellt, und
- x: einen Wert 1, 2 oder 3 bedeutet.

Der pKₛ-Wert als Maß für die Stärke einer Säure ist dem Fachmann bekannt; eine geeignete Definition findet sich in "Grundlagen der allgemeinen und anorganischen Chemie", Hans-Rudolf Christen, 9. Auflage, 1988, Kapitel 10.3.

Sofern es sich bei der Säure (S) um eine Säure mit nur einem aciden Proton handelt, besitzt diese nur eine Protolysestufe, welche folglich einen pKₛ-Wert von maximal 4,0 aufweisen muss.

Sofern es sich bei Säure (S) um eine Säure mit mehr als einem aciden Proton handelt, ist die obige Formulierung, nach der die sämtliche Protolysenstufen pKₛ-Werte von maximal 4,0 aufweisen, so zu verstehen, dass sowohl die nicht deprotonierte Säure (S) als auch alle Säuren, die sich durch eine einfache oder gegebenenfalls auch mehrfache Deprotonierung aus der nicht deprotonierten Säure (S) herleiten lassen, über pKₛ-Werte von maximal 4,0 verfügen müssen.

Vorzugsweise weist die Säure (S) für sämtliche Protolysenstufen pKₛ-Werte von maximal 3,5, besonders bevorzugt von maximal 3,0 insbesondere von maximal 2,5, auf. Die Ausführungen der beiden vorstehenden Absätze gelten dabei sinngemäß auch für die hier angegebenen kleineren pKₛ-Werte.

Bei der vollständigen oder teilweisen Neutralisation wird die Säure (S) in einer Menge zugegeben, dass auf ein Mol basischer Funktionen im Katalysator (K) 0,5 bis 100 Mol, vorzugsweise 0,8 bis 10 Mol, besonders bevorzugt 0,9 bis 5, insbesondere 0,99 bis 2 Mol, saure Wasserstoffe kommen.

Bevorzugte Säuren (S) sind entsprechend starke anorganische Säuren. Besonders bevorzugt sind Chlorwasserstoff, schwefelhaltige Säuren, insbesondere Schwefelsäure und Toluolsulfonsäure, Salpetrige Säure und Salpetersäure. Vorzugsweise werden dabei konzentrierte Säuren, d.h. Säuren mit einem Wassergehalt < 70 Gew.-%, eingesetzt, wobei Säuren mit einem Wassergehalt < 10 Gew.-%, insbesondere < 5 Gew.-% besonders bevorzugt werden.

Beispiele für Reste R¹ sind Alkylreste, wie der Methyl-, Ethyl-, n-Propyl-, iso-Propyl-, 1-n-Butyl-, 2-n-Butyl-, isoButyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest, iso-Octylreste und der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Cycloalkylreste, wie der Cyclopentyl-, Cyclohexyl-, Cycloheptylrest und Methylcyclohexylreste; Alkenylreste, wie der Vinyl-, 1-Propenyl- und der 2-Propenylrest; Arylreste, wie der Phenyl-, Naphthyl-, Anthryl- und Phenanthrylrest; Alkarylreste, wie o-, m-, p-Tolylreste; Xylylreste und Ethylphenylreste; und Aralkylreste, wie der Benzylrest, der α- und der β-Phenylethylrest.

Beispiele für substituierte Reste R¹ sind Halogenalkylreste, wie der 3,3,3-Trifluor-n-propylrest, der 2,2,2,2',2',2'-Hexafluor- isopropylrest und der Heptafluorisopropylrest, und Halogenarylreste, wie der o-, m- und p-Chlorphenylrest.

Bevorzugt handelt es sich bei dem Rest R¹ um einen unsubstituierten oder mit Halogenatomen substituierten, einwertigen Kohlenwasserstoffreste mit 1 bis 6 Kohlenstoffatomen, besonders bevorzugt um einen Alkylrest mit 1 oder 4 Kohlenstoffatomen, insbesondere um den Ethyl- oder Methylrest.

Beispiele für Reste R⁵ sind die für R¹ angegebenen Reste. Bevorzugt handelt es sich bei dem Rest R⁵ um einen unsubstituierten oder mit Halogenatomen substituierten einwertigen Kohlenwasserstoffrest mit 1 bis 6 Kohlenstoffatomen, besonders bevorzugt um einen Alkylrest mit 1 oder 4 Kohlenstoffatomen, insbesondere um den Ethyl- oder Methylrest.

Besonders bevorzugt sind R¹ und R⁵ identisch, wobei es sich besonders bevorzugt sowohl bei R¹ als auch bei R⁵ jeweils um Ethyl- oder aber jeweils um Methylreste handelt.

Beispiele für Reste R⁴ sind unabhängig voneinander die für R¹ angegebenen Reste.

Bevorzugt handelt es sich bei den Resten R⁴ um einen unsubstituierten oder mit Halogenatomen substituierten, einwertigen Kohlenwasserstoffrest mit 1 bis 6 Kohlenstoffatomen, besonders bevorzugt um einen Alkylrest mit 1 bis 4 Kohlenstoffatomen, insbesondere um den Ethyl- oder Methylrest.

Besonders bevorzugt sind sämtliche Reste R⁴, der R¹ und der Rest R⁵ identisch, wobei es sich besonders bevorzugt bei all diesen Resten entweder jeweils um Ethyl- oder aber jeweils um Methylreste handelt.

Beispiele für Reste R³ sind die für R¹ angegebenen Reste. Bevorzugt handelt es sich bei dem Rest R³ um einen unsubstituierten oder mit Halogenatomen substituierten, einwertigen Kohlenwasserstoffrest mit 1 bis 6 Kohlenstoffatomen, besonders bevorzugt um einen Alkylrest mit 1 oder 4 Kohlenstoffatomen, insbesondere um den Methylrest.

Beispiele für Reste R² sind zweiwertige Alkylenreste mit 1 bis 20 Kohlenstoffatomen, wie der Methylen-, Ethylen-, n-Propylen-, Butylen-, Pentylen-, Hexylen-, Heptylen-, Octylen, Nonylen oder der n-Decylenrest. Die genannten Reste können dabei auch über weitere Alkylsubstituenten wie z.B. über Methyl-, Ethyl- oder Propylsubstituenten verfügen. Auch Halogensubstituenten, z.B. Chlor- oder Bromsubstituenten sind möglich. Zudem kann es sich bei den Resten R² auch um zweiwertige cyclische Reste, z.B. Cyclopentylen-, Cyclohexylen- oder Phenylreste handeln. Auch diese können über die oben genannten Alkyl- oder Halogensubstituenten verfügen.

Bevorzugt handelt es sich bei den Resten R² um Alkylenreste mit ein bis 6 Kohlenstoffatomen, besonders bevorzugt um den Butylen, 2-Methylproylen, Propylen- und den Methylenrest, insbesondere um den Propylen- und den Methylenrest.

Die Variable x hat vorzugsweise den Wert 2 oder 3.

Der Erfindung liegt eine erste überraschende Entdeckung zugrunde, dass die erfindungsgemäß mit starken Säuren (S) neutralisierten Mischungen aus Carbamatoorganosilanen (CS) und Katalysator (K) auch ohne destillative Aufreinigung zur Herstellung von Isocyanatoorganosilanen (IS) eingesetzt werden können. In der Regel ist dabei noch nicht einmal eine Abtrennung des Neutralisationsproduktes aus dem Katalysator (K) und der Säure (S) erforderlich. Die thermolytische Alkoholabspaltung verläuft dabei nicht nur wesentlich unproblematischer sondern auch mit wesentlich besseren Ausbeuten, als wenn man die Neutralisation mit nicht erfindungsgemäß eingesetzten, schwächeren Säuren durchgeführt hätte. Das gilt auch für diejenigen Fälle, in denen man das Neutralisationsprodukt aus dem Katalysator (K) und der nicht erfindungsgemäß eingesetzten schwächeren Säure vor der thermolytische Alkoholabspaltung durch Filtration entfernt hat.

Noch überraschender ist die zweite Entdeckung, die dieser Erfindung zugrunde liegt. So weisen die nach dem erfindungsgemäßen Verfahren, d.h. unter Einsatz einer erfindungsgemäß eingesetzten starken Säure (S), hergestellten Isocyanatoorganosilane (IS) eine dramatisch verbesserte Lagerstabilität auf.

Die Herstellung der Carbamatoorganosilanen (CS) aus Aminoorganosilan (AS) und einem Dialkylcarbonat (DAC) in Gegenwart eines basischen Katalysators (K) erfolgt dabei vorzugsweise bei Temperaturen zwischen 0 und 120 °C, besonders bevorzugt in einem Temperaturbereich zwischen 35 und 90 °G.

Vorzugsweise werden die Komponenten dabei zunächst bei einer niedrigeren Temperatur von 40 °C bis 70 °C, vorzugsweise 45 °C bis 65 °C zusammengegeben, und es wird für 0,5 bis 3 weitere Stunden gerührt, woraufhin die Temperatur zur Vervollständigung der Reaktion auf Werte von 70 bis 130 °C, vorzugsweise zwischen 70 und 100 °C erhöht wird. Bei dieser Temperatur wird vorzugsweise für weitere 0,5 bis 3 Stunden gerührt. Bevorzugte Beispiele für Carbamatosilane (CS) der allgemeinen Formel (5) sind *N*-(3-Trimethoxysilylpropyl)-*O*-methylcarbamat, *N*-(3-Triethoxy-silylpropyl)-*O*-ethylcarbamat, *N*-(3-Methyldimethoxysilylpropyl)-*O*-methylcarbamat, *N*-(3-Methyldiethoxysilylpropyl)-*O-*ethylcarbamat, *N*-(Trimethoxysilylmethyl)-*O*-methylcarbamat, *N-*(Triethoxysilylmethyl)-*O*-ethylcarbamat, *N*-(Methyldimethoxy-silylmethyl)-*O*-methylcarbamat und *N*-(Methyldiethoxy-silylmethyl)-*O*-ethylcarbamat, insbesondere *N*-(3-Trimethoxy-silylpropyl)-*O*-methylcarbamat, *N*-(3-Triethoxysilylpropyl)-O-ethylcarbamat, *N*-(Trimethoxysilylmethyl)-*O*-methylcarbamat, *N-*(Triethoxysilylmethyl)-*O*-ethylcarbamat und *N*-(Methyldimethoxy-silylmethyl)-*O*-methylcarbamat.

Diese bevorzugte Carbamatosilane (CS) werden vorzugsweise aus Aminosilanen (AS) der allgemeinen Formel (6) und Dialkylcarbonaten (DAC) der allgemeinen Formel (7) hergestellt, die über genau dieselben Reste R¹ bis R⁴ sowie dieselbe Variable x verfügen, wie das erhaltene Carbamatosilan (CS). Der Rest R⁵ im Dialkylcarbonat (DAC) weist dabei vorzugsweise dieselbe Bedeutung auf wie der Rest R¹.

Vorzugsweise werden bei der erfindungsgemäßen Reaktion die Aminosilane (AS) und die Dialkylcarbonate (DAC) in einem Verhältnis von 1,0:0,9 bis 1,0:3,0, besonders bevorzugt in einem Verhältnis von 1,0:1,0 bis 1,0:2,0, insbesondere in einem Verhältnis von 1,0:1,0 bis 1,0:1,5 eingesetzt. Um einerseits einen möglichst vollständigen Umsatz der Aminosilankomponente (AS) zu erzielen, andererseits aber auch eine möglichst gute Raum-ZeitAusbeute erreichen, d.h. einen möglichst kleinen Überschuss an Dialkylcarbonat (DAC) einzusetzen, stellt ein Mengenverhältnis zwischen Aminosilan (AS) und Dialkylcarbonat (DAC) von 1:1,1 bis 1:1,5 ein besonders bevorzugtes Optimum dar.

Sowohl die entsprechenden Aminosilane (AS) als auch die Dialkylcarbonate (DAC) sind kommerziell von zahlreichen verschiedenen Anbietern erhältlich.

Als Katalysator (K) werden Metallalkoholate, insbesondere Alkali- oder Erdalkalialkoholate eingesetzt. Besonders bevorzugte Katalysatoren sind Natriummethanolat, Natriumethanolat, Kaliummethanolat, Kaliumethanolat, Calciummethanolat oder Calciumethanolat. In einer besonders bevorzugten Ausführung der Erfindung wird ein Alhoholat eingesetzt, dessen Alkylgruppe den Resten R⁴ in Formel (3) entspricht. Dies ist vor allem dann von Vorteil, wenn alle Reste R¹, R⁴ und R⁵ identisch sind.

Der Katalysator kann dabei in Substanz aber auch in Form einer Lösung, insbesondere in Form einer alkoholischen Lösung eingesetzt werden. Im Falle einer alkoholischen Lösung sind die Alkylgruppen des Alkohols und des Alkoholates vorzugsweise identisch. Geeignete Katalysatorlösungen mit typischerweise 10 bis 33 %-iger Lösung des Metallalkoholates in dem entsprechenden Alkohol sind kommerziell verfügbar und werden ob ihrer leichten Dosierbarkeit besonders bevorzugt eingesetzt.

Vorzugsweise liegt der Gehalt des Katalysators (K) bei höchstens 1,0 Gew.-%, besonders bevorzugt bei höchstens 0,5 Gew.-%, insbesondere höchstens bei 0,2 Gew.-%, jeweils bezogen auf das Gewicht der gesamten Reaktionsmischung.

Vorzugsweise enthält die Reaktionsmischung außer den Komponenten Aminosilan (AS), Dialkylcarbonat (DAC) und Katalysator (K) weitere Stoffe wie z.B. Lösungsmittel in Mengen von höchstens 50 Gew.-%, besonders bevorzugt höchstens 30 Gew.-%, insbesondere höchstens 15 Gew.-%, jeweils bezogen auf die gesamte Reaktionsmischung. Bei einer besonders bevorzugten Verfahrensvariante enthält die Reaktionsmischung außer den Reaktanden und dem Katalysator (K) sowie dem gegebenenfalls vorhandenen Lösungsmittel, in dem der Katalysator (K) gelöst war, keinerlei weitere Komponenten, insbesondere keine weiteren Lösungsmittel.

Die Neutralisation des Katalysators (K) mit der erfindungsgemäß eingesetzten Säure (S) kann dabei sowohl bei Raumtemperatur als auch bei erhöhten Temperaturen durchgeführt werden. Bei einem besonders bevorzugten Verfahren wird die Neutralisation direkt nach Reaktionsende durchgeführt, ohne dass die Reaktionsmischung nennenswert, d.h. um mehr als 20 °C, aufgewärmt oder abgekühlt wird. Dies hat im industriellen Prozess den Vorteil, dass keine zusätzlichen Zeiten für Aufwärm- und Abkühlvorgänge benötigt werden. Auch die nachfolgende destillative Entfernung der Leichtsieder (s.u.) kann direkt im Anschluss ohne nennenswerte Aufwärm- oder Abkühlschritte, d.h. Temperaturänderungen von mehr als 20 °C, begonnen werden.

Das meist feste Neutralisationsprodukt aus dem Katalysator (K) und der Säure (S) kann gegebenenfalls durch einen Filtrationsschritt entfernt werden. Bei einer besonders bevorzugten Ausführung der Erfindung wird jedoch auf diesen zusätzlichen Verfahrensschritt verzichtet, d.h. das feste Neutralisationsprodukt aus dem Katalysator (K) und der Säure (S) ist bei 20°C fest und wird vom Dialkylcarbonat (DAC) der allgemeinen Formel (7) nicht abgetrennt.

Der bei der Carbamatoorganosilanherstellung freigesetzte Alkohol sowie der gegebenenfalls eingesetzte Dialkylcarbonatüberschuss (DAC) werden vorzugsweise destillativ entfernt. Dies kann direkt im Anschluss an die Reaktion erfolgen, indem die zu entfernenden Leichtsieder direkt aus dem Reaktionsgemisch abdestilliert werden, aber auch in einen gesonderten Destillationsschritt, z.B. über einen Dünnschicht- oder Fallfilmverdampfer. Die Destillation kann dabei auch in Gegenwart des neutralisierten, aber noch nicht entfernten Katalysators (K) erfolgen.

Vorzugsweise werden jedoch nur die leichtsiedenden Komponenten aus den erfindungsgemäß zur Isocyanatosilan-Herstellung einzusetzenden Carbamatoorganosilanen (CS) destillativ entfernt. Die Carbamatoorganosilane (CS) selbst hingegen werden nicht destilliert.

Die Herstellung der erfindungsgemäß einzusetzenden Carbamatoorganosilane (CS) kann dabei sowohl batchweise als auch kontinuierlich durchgeführt werden. Dies kann gilt sowohl für die eigentliche Reaktion als auch für die beschriebenen Aufarbeitungsschritte. Ebenso ist vorstellbar, dass nur einzelne Prozessschritte kontinuierlich durchgeführt werden, z.B. dass die Reaktion kontinuierlich, die Aufarbeitung aber batchweise erfolgt. Umgekehrt kann selbstverständlich auch die Reaktion batchweise, anschließende Aufarbeitungsschritte - insbesondere die destillative Entfernung der Leichtsieder - hingegen kontinuierlich erfolgen.

Die erfindungsgemäß hergestellten Carbamatoorganosilane (CS) weisen vorzugsweise eine Reinheit >90%, besonders bevorzugt von >95%, insbesondere >97%, auf.

Die nachfolgende Synthese der Isocyanatoorganosilane (IS) durch eine thermolytische Alkoholabspaltung aus den Carbamatoorganosilanen (CS) kann auf verschiedene Weisen erfolgen. Vorzugsweise werden die Carbamatoorganosilane bevorzugt auf hohe Temperaturen >200 °C, besonders bevorzugt >250 °C, gegebenenfalls sogar >280 °C erhitzt, wobei es zu Abspaltung eines Alkoholmoleküls aus der Carbamatfunktion und Bildung des Isocyanatoorganosilans (IS) kommt.

Dabei kann die Spaltung natürlich vergleichswese einfach in einem Kolben oder Kessel erfolgen, wobei die leichter flüchtigen Reaktionsprodukte destillativ entfernt werden. Effizienter sind aber meist aufwändigere Verfahren, wie sie in EP 0 649 850 B1, EP 0 870 769 B1, EP 1 692 146 B1 oder EP 2 097 426 B1 beschrieben sind.

Besonders bevorzugt werden Verfahren, wie sie in EP 2 097 426 B1 beschrieben sind, bei denen die Spaltung der Carbamatoorganosilanen kontinuierlich in einem Dünnschicht- oder Kurzwegverdampfer bei einem Druck >100 mbar, vorzugsweise > 500 mbar, in Gegenwart eines Katalysators (K') erfolgt. Dieses Verfahren hat den Vorteil, dass die Reaktionsprodukte besonders schnell verdampfen und somit nur noch in geringem Maße unerwünschte Folgereaktionen eingehen können. Zudem bewirkt die schnelle Verdampfung eine stete Verschiebung des Reaktionsgleichgewichtes zugunsten der Produkte.

Der Katalysator (K') wird dem Carbamatoorganosilan (CS) vorzugsweise vor Reaktionsbeginn zugemischt. Besonders bevorzugt ist der Katalysator (K') flüssig oder aber im Carbamatoorganosilan (CS) löslich. Bevorzugte Katalysatoren (K') stellen dabei sämtliche Verbindungen dar, die in der Polyurethan-Chemie zur Katalyse von Kondensationsreaktionen von Isocyanaten und Alkoholen verwendet werden. Beispielhaft genannt seien hier die üblicherweise verwendeten organischen Zinnverbindungen, wie z.B. Dibutylzinndilaurat, Dioctylzinndilaurat, Dibutylzinndiacetylacetonat, Dibutylzinndiacetat oder Dibutylzinndioctoat etc. genannt. Ebenso können auch zweiwertige Zinnkatalysatoren wie Zinndiacetat- oder Zinndilaurat verwendet werden. Des Weiteren können auch organische Bismut- und/oder Zinkverbindungen, z.B. die verschiedenen Katalysatoren der Firma Borcherts wie Borchi-Kat 22, Borchi-Kat 24 oder Borchi-Kat 0244, organische Titanverbindungen, wie Titanate, z.B. Titan(IV)isopropylat oder Titan(IV)acetylacetonat, organische Eisen-Verbindungen, z.B. Eisen(III)acetylacetonat, Eisen(II)acetylacetonat oder auch andere Metallverbindungen wie Zirkonium(IV)acetylacetonat, Kobalt(III)acetylacetonat oder Manganacetylacetonat verwendet werden.

Selbstverständlich können auch Kombinationen mehrerer Katalysatoren (K') eingesetzt werden. Bevorzugt werden nicht bzw. nur wenig flüchtige Katalysatoren, insbesondere die oben genannten Metallkomplexe eingesetzt, wobei Zinn (IV), Zinn (II) und Eisen (III)-Komplexe besonders bevorzugt werden. Der Katalysator (K') wird dabei bevorzugt in Konzentrationen von 1 - 10 000 ppm eingesetzt, wobei Konzentrationen von 10 - 5 000 ppm bzw. 100 - 2 000 ppm besonders bevorzugt werden.

Bei einer bevorzugten Ausführungsform der Erfindung wird_während des Verdampfungsvorganges ein inerter Gasstrom, z.B. aus Argon, Wasserstoff oder Stickstoff durch diese Verdampfungseinheit geleitet. Dieser wird vorzugsweise vor der Einleitung in die Verdampfungseinheit erhitzt, insbesondere im industriellen Prozess. Der heiße Trägergasstrom unterstützt dabei die Erwärmung und Verdampfung des Reaktionsgemisches. Als Gas wird Stickstoff bevorzugt.

Bevorzugt werden die verdampften Reaktionsprodukte danach fraktioniert kondensiert, wobei der abgespaltene Alkohol vorzugsweise gasförmig abgetrennt und das Isocyanatoorganosilan (IS) und das gegebenenfalls ebenfalls in Teilen verdampfte Carbamatoorganosilan (CS) gemeinsam oder gegebenenfalls auch nacheinander getrennt kondensiert werden. Durch die Abtrennung des Alkohols wird eine Rückreaktion des gebildeten Isocyanatoorganosilans (IS) verhindert. Bevorzugt findet die Abtrennung des Alkohols in einem Kühler oder einer einfachen Trennsäule statt, in der der Alkohol gasförmig abgezogen wird und Silane (IS) und (CS) gemeinsam auskondensiert werden.

Das Isocyanatoorganosilan (IS) wird anschließend vorzugsweise destillativ aufgereinigt, was sowohl kontinuierlich als auch diskontinuierlich erfolgen kann, wobei ersteres bevorzugt wird. Das dabei abgetrennte Carbamatoorganosilan (CS) wird vorzugsweise in den thermolytischen Herstellprozess zurückgeführt.

Das erfindungsgemäße Verfahren hat den Vorteil, dass die erhaltenen Isocyanatoorganosilane (IS) eine verbesserte Lagerstabilität aufweisen.

Das erfindungsgemäße Verfahren hat den Vorteil, dass es sehr gute Ausbeuten liefert und somit kostengünstig ist.

Das erfindungsgemäße Verfahren hat den Vorteil, dass es nur in geringem Umfang Nebenprodukte generiert, die z.B. durch die Bildung von Ablagerungen zu Störungen im Produktionsprozess führen können.

Das erfindungsgemäße Verfahren hat den Vorteil, sehr einfach und robust zu sein.

Alle vorstehenden Symbole der vorstehenden Formeln weisen ihre Bedeutungen jeweils unabhängig voneinander auf. In allen Formeln ist das Siliciumatom vierwertig.

In den folgenden Beispielen sind, falls jeweils nicht anders angegeben, alle Mengen- und Prozentangaben auf das Gewicht bezogen, alle Drücke 0,10 MPa (abs.) und alle Temperaturen 20°C.

### Beispiel 1a erfindungsgemäß

### Verfahren zur Herstellung von N-(3-Trimethoxysilylpropyl)-O-methylcarbamat

In einem 4 1-Vierhalskolben mit Tropftrichter, Liebigkühler, KPG-Rührer und Thermometer wird eine Mischung aus 1825,2 g (10,18 mol) Aminopropyltrimethoxysilan und 12,6 g einer 30 gew.-%igen Lösung Natriummethanolat in Methanol (entspricht 3,8 g reines Natriummethanolat) vorgelegt und auf 55 °C erwärmt. Bei dieser Temperatur werden 1100,4 g (12,22 Mol) Dimethylcarbonat innerhalb von 60 min zudosiert. Um die Temperatur zu halten, ist eine leichte Kühlung erforderlich.

Anschließend wird für 1 h bei 55 °C nachgerührt und daraufhin auf 80 °C erwärmt. Bei dieser Temperatur wird für 2 weitere Stunden geführt.

Schließlich werden 3,9 g Schwefelsäure (98%ig) hinzugegeben. Dabei tritt nur eine ganz leichte Trübung der Reaktionsmischung auf. Ein aus der Reaktionsmischung entnommener Tropfen wird auf ein zuvor angefeuchtetes pH-Papier gegeben. Die Reaktionsmischung zeigt einen pH-Wert von 6 bis 7.

Aus der neutralisierten Reaktionsmischung werden die Leichtsieder destillativ entfernt. Dazu wird der Druck stufenweise auf bis zu 1 mbar abgesenkt, während die Sumpftemperatur zunächst bei 80 °C verbleibt und zum Schluss noch einmal auf 110 °C erhöht wird. Die Destillation ist abgeschlossen, sobald kein Destillat mehr übertritt. Eine Analyse des Destillates mittels GC und/oder ¹H-NMR zeigt, dass das Destillat nahezu ausschließlich (d.h. zu mehr als 99 %) aus dem freigesetzten Methanol und dem im Überschuss eingesetzten Dimethylcarbonat besteht.

Es wird ein schwach gelbes Produkt in einer Reinheit von 98,5% erhalten. Die Ausbeute ist bezogen auf das eingesetzte Aminosilan nahezu quantitativ (>99 %). Eine Fitration zur Abtrennung des entstandenen Natriumsulfats ist nicht erforderlich.

### Beispiel 2a erfindungsgemäß

### Verfahren zur Herstellung von erfindungsgemäßem N-(3-Tri-methoxysilylpropyl)-O-methylcarbamat

Es wird so vorgegangen wie in Beispiel 1a. Allerdings werden zur Neutralisation statt der Schwefelsäure 7,63 g konzentrierte, d.h. 37 gew.-%ige, Salzsäure zugegeben. Ebenso wie in Beispiel 1a kommt es bei der Säurezugabe auch hier nur zu einer leichten Trübung der Reaktionsmischung.

Auch hier ist eine Fitration zur Abtrennung des entstandenen Natriumchlorids nicht erforderlich. Die Produktreinheit beträgt 97,3%.

### Vergleichsbeispiel 1a nicht erfindungsgemäß

### Verfahren zur Herstellung von nicht erfindungsgemäßem N-(3-Tri-methoxysilylpropyl)-O-methylcarbamat

Es wird so vorgegangen wie in Beispiel 1a. Allerdings werden zur Neutralisation statt der Schwefelsäure 4,66 g Essigsäure zugegeben. Anders als in Beispiel 1a fällt bei der Säurezugabe ein gut filtrierbarer Niederschlag aus. Die Produktreinheit beträgt 98,3%.

Nach der Durchführung aller in Beispiel 1a beschriebenen Arbeitsschritte wird der Ansatz in zwei gleichgroße Hälften geteilt. Bei der einen Hälfte wird das ausgefallene Natriumacetat durch einen zusätzlichen Filtrationsschritt entfernt. Die andere Hälfte bleibt unfiltriert.

### Vergleichsbeispiel 2a nicht erfindungsgemäß

### Verfahren zur Herstellung von nicht erfindungsgemäßem N-(3-Tri-methoxysilylpropyl)-O-methylcarbamat

Es wird so vorgegangen wie in Beispiel 1a. Allerdings werden zur Neutralisation statt der Schwefelsäure 4,55 g Zitronensäure zugegeben. Ebenso wie in Beispiel 1a kommt es bei der Säurezugabe auch hier nur zu einer leichten Trübung der Reaktionsmischung.

Eine Abtrennung des Feststoffes durch Filtration mittels herkömmlicher Papierfilter ist nicht möglich. Die Produktreinheit beträgt 98,1%.

### Vergleichsbeispiel 3a nicht erfindungsgemäß

### Verfahren zur Herstellung von nicht erfindungsgemäßem N-(3-Tri-methoxysilylpropyl)-O-methylcarbamat

Es wird so vorgegangen wie in Beispiel 1a. Allerdings werden zur Neutralisation statt der Schwefelsäure 3,79 g reine Phosphorsäure zugegeben. Ebenso wie in Beispiel 1a kommt es bei der Säurezugabe auch hier nur zu einer leichten Trübung der Reaktionsmischung.

Eine Abtrennung des Feststoffes durch Filtration mittels herkömmlicher Papierfilter ist nicht möglich. Die Produktreinheit beträgt 97,9%.

### Beispiel 1b

### Erfindungsgemäßes Verfahren zur Herstellung von 3-Isocyanatopropyl-trimethoxysilan

Die Spaltung des Carbamatoorganosilans in Isocyanatoorganosilan und Alkohol erfolgt in einem Dünnschichtverdampfer mit einer Länge von 25 cm, einem Innendurchmesser von 8 cm, und einer Wandtemperatur von 300 °C.
300 g des in den Beispielen 1a hergestellten N-(3-Trimethoxy-silylpropyl)-O-methylcarbamats werden mit 0,21 g Dioctylzinndilaurat versetzt. Die Dosierung erfolgt mit einer Geschwindigkeit von 110 ml/h am oberen Ende des Dünnschichtverdampfers. Von unten nach oben, d.h. gegen die Laufrichtung der Reaktionsmischung, wird ein Sickstoffstrom von 65 l/h geleitet. Unter diesen Bedingungen beträgt der Sumpfablauf lediglich ca. 10% der zudosierten Silanmenge.

Die verdampfte Produktmischung wird zusammen mit dem Stickstoffstrom über eine 10 cm lange und mittels eines Vakuummantels isolierte Vigreuxkolonne geleitet, wobei der flüssige Kolonnenrücklauf zurück in den Dünnschichtverdampfer geführt wird. Die Kopftemperatur der Vigreuxkolonne liegt bei 158-164 °C. Aus diesem Gasstrom wird das Silan mittels eines herkömmlichen Glaskühlers bei einer Temperatur von 54 °C selektiv kondensiert. In einem zweiten Kondensationsschritt wird anschließend das Methanol bei einer Temperatur von 0 °C auskondensiert, ehe der Stickstoffstrom durch eine Kühlfalle in die Luftabsaugung des Laborabzuges geleitet wird, in dem sich die gesamte Anlage befindet.

Es werden 231 g kondensierte Silanmischung erhalten. Die farblose Flüssigkeit wird mittels ¹H-NMR und gaschromatographisch analysiert. Sie enthält 83,1% aus 3-Isocyanatopropyltrimethoxysilan, 16,4% *N*-(3-Trimethoxysilylpropyl)-*O*-methylcarbamat und 0,1% Methanol.

Bei einer nachfolgenden fraktionierten Destillation werden 172 g 3-Isocyanatopropyl-trimethoxysilan in einer Reinheit von 98,9% erhalten.

### Beispiel 2b erfindungsgemäß

### Erfindungsgemäßes Verfahren zur Herstellung von 3-Isocyanatopropyl-trimethoxysilan

Es wird so vorgegangen wie in Beispiel 1b. Allerdings wird anstelle des in Beispielen 1a hergestellten *N*-(3-Trimethoxy-silylpropyl)-*O*-methylcarbamats das in Beispiel 2a hergestellte Produkt verwendet. Alle anderen Reaktionsparameter bleiben unverändert.

Es werden 225 g kondensierte Silanmischung erhalten. Die farblose Flüssigkeit wird gaschromatographisch analysiert. Sie enthält 83,4% 3-Isocyanatopropyl-trimethoxysilan, 16,2% *N*-(3-Tri-methoxysilylpropyl)-*O*-methylcarbamat und 0,2% Methanol.

### Vergleichsbeispiel 1b

### Nicht erfindungsgemäßes Verfahren zur Herstellung von 3-Isocyanatopropyl-trimethoxysilan

Es wird so vorgegangen wie in Beispiel 1b. Allerdings wird anstelle des in Beispielen 1a hergestellten *N*-(3-Trimethoxy-silylpropyl)-*O*-methylcarbamats das in Vergleichsbeispiel 1a hergestellte unfiltrierte Produkt verwendet. Alle anderen Reaktionsparameter bleiben unverändert.

Die Isocyanatosilanherstellung muss ca. 40 Minuten nach Dosierbeginn der Silan-Katalysatormischung abgebrochen werden, weil der Reaktionsdünnschichter auf Grund von Feststoffablagerungen blockiert. Es wird nur eine geringe Menge Silankondensat erhalten, die nicht weiter analysiert wird.

### Vergleichsbeispiel 1c

### Nicht erfindungsgemäßes Verfahren zur Herstellung von 3-Isocyanatopropyl-trimethoxysilan

Es wird so vorgegangen wie in Beispiel 1b. Allerdings wird anstelle des in Beispielen 1a hergestellten *N*-(3-Trimethoxy-silylpropyl)-*O*-methylcarbamats das in Vergleichsbeispiel 1a hergestellte und anschließend filtrierte Produkt verwendet. Alle anderen Reaktionsparameter bleiben unverändert.

Der Sumpfablauf ist merklich erhöht, und es werden lediglich 180 g kondensierte Silanmischung erhalten. Die farblose Flüssigkeit wird gaschromatographisch analysiert. Sie enthält 82,8% 3-Isocyanatopropyl-trimethoxysilan, 16,2% *N*-(3-Trimethoxy-silylpropyl)-*O*-methylcarbamat und 0,1% Methanol.

Bei einer nachfolgenden fraktionierten Destillation werden 133 g 3-Isocyanatopropyltrimethoxysilan in einer Reinheit von 98,7% erhalten.

### Vergleichsbeispiel 2b

### Nicht erfindungsgemäßes Verfahren zur Herstellung von 3-Isocyanatopropyl-trimethoxysilan

Es wird so vorgegangen wie in Beispiel 1b. Allerdings wird anstelle des in Beispielen 1a hergestellten *N*-(3-Trimethoxy-silylpropyl)-*O*-methylcarbamats das in Vergleichsbeispiel 2a hergestellte Produkt verwendet. Alle anderen Reaktionsparameter bleiben unverändert.

Die Isocyanatosilanherstellung muss ca. 30 Minuten nach Dosierbeginn der Silan-Katalysatormischung abgebrochen werden, weil der Reaktionsdünnschichter auf Grund von Feststoffablagerungen blockiert. Es wird nur eine geringe Menge Silankondensat erhalten, die nicht weiter analysiert wird.

### Vergleichsbeispiel 3b

### Nicht erfindungsgemäßes Verfahren zur Herstellung von 3-Isocyanatopropyl-trimethoxysilan

Es wird so vorgegangen wie in Beispiel 1b. Allerdings wird anstelle des in Beispielen 1a hergestellten *N*-(3-Trimethoxy-silylpropyl)-*O*-methylcarbamats das in Vergleichsbeispiel 3a hergestellte Produkt verwendet. Alle anderen Reaktionsparameter bleiben unverändert.

Die Isocyanatosilanherstellung muss ca. 2 h nach Dosierbeginn der Silan-Katalysatormischung abgebrochen werden, weil der Reaktionsdünnschichter auf Grund von Feststoffablagerungen blockiert. Es werden ca. 100 g Silankondensat erhalten, die nicht weiter analysiert werden.

### Beispiel 1c

### Stabilitätsuntersuch eines nach dem erfindungsgemäßen Verfahren hergestellten 3-Isocyanatopropyl-trimethoxysilan.

100 g des in Beispiel 1b hergestellten und durch Destillation aufgereinigten 3-Isocyanatopropyl-trimethoxysilan werden für 3 Monate in einem Glaskolben unter Schutzgas gelagert. Die Probe zeigt dabei keine optische Veränderung.
Nach Beendigung der Lagerung wird erneut die Reinheit mittels GC bestimmt. Sie hat sich von 98,9% auf 96,5% verringert.

### Vergleichsbeispiel 1d

### Stabilitätsuntersuch eines nach einem nicht erfindungsgemäßen Verfahren hergestellten 3-Isocyanatopropyl-trimethoxysilan.

100 g des in Vergleichsbeispiel 1c hergestellten und durch Destillation aufgereinigten 3-Isocyanatopropyl-trimethoxysilan werden für 3 Monate in einem Glaskolben unter Schutzgas gelagert. Die Probe zeigt dabei eine deutliche Eintrübung.
Nach Beendigung der Lagerung wird erneut die Reinheit mittels GC bestimmt. Sie hat sich von 98,7% auf 86,5% verringert.

### Beispiel 3a erfindungsgemäß

### Verfahren zur Herstellung von N-(Methyldimethoxysilylmethyl)-O-methylcarbamat

In einem 2 l-Vierhalskolben mit Tropftrichter, Liebigkühler, KPG-Rührer und Thermometer wird eine Mischung aus 360,3 g (3,97 mol) Dimethylcarbonat und 2,99 g einer 30 Gew.-%igen Lösung Natriummethanolat in Methanol (entspricht 0,90 g reines Natriummethanolat) vorgelegt und auf 55 °C erwärmt. Bei dieser Temperatur werden 386,0 g (2,83 Mol) Aminomethylmethyldimethoxysilan innerhalb von 60 min zudosiert. Um die Temperatur zu halten, ist eine leichte Kühlung erforderlich.

Anschließend wird für 1 h bei 40 °C nachgerührt und daraufhin auf 80 °C erwärmt. Bei dieser Temperatur wird für 1 weitere Stunde geführt.

Schließlich werden 1,30 g Schwefelsäure (98%ig) hinzugegeben. Dabei tritt nur eine ganz leichte Trübung der Reaktionsmischung auf. Ein aus der Reaktionsmischung entnommener Tropfen wird auf ein zuvor angefeuchtetes pH-Papier gegeben. Die Reaktionsmischung zeigt einen pH von 6 bis 7.

Aus der neutralisierten Reaktionsmischung werden die Leichtsieder destillativ entfernt. Dazu wird der Druck stufenweise auf bis zu 1 mbar abgesenkt, während die Sumpftemperatur zunächst bei 80 °C verbleibt und zum Schluss noch einmal 110 °C erhöht wird. Die Destillation ist abgeschlossen, sobald kein Destillat mehr übertritt. Eine Analyse des Destillates mittels GC und/oder ¹H-NMR zeigt, dass das Destillat nahezu ausschließlich (d.h. zu mehr als 99 %) aus dem freigesetzten Methanol, dem im Überschuss eingesetzten Dimethylcarbonat und geringen Mengen Methyltrimethoxysilan besteht.

Es wird ein schwach gelbes Produkt in einer Reinheit von 96,8% erhalten. Die Ausbeute ist bezogen auf das eingesetzte Aminosilan hoch (>95 %). Eine Fitration zur Abtrennung des entstandenen Natriumsulfats ist nicht erforderlich.

### Vergleichsbeispiel 4a

### Verfahren zur Herstellung von nicht erfindungsgemäßen N-(Methyldimethoxysilylmethyl)-O-methylcarbamat

Es wird so vorgegangen wie in Beispiel 3a. Allerdings werden zur Neutralisation statt der Schwefelsäure 1,47 g Essigsäure zugegeben. Anders als in Beispiel 3a fällt bei der Säurezugabe ein gut filtrierbarer Niederschlag aus. Die Produktreinheit beträgt 97,1%.

Nach der Durchführung aller in Beispiel 3a beschriebenen Arbeitsschritte wird das ausgefallene Natriumacetat durch einen zusätzlichen Filtrationsschritt entfernt.

### Beispiel 3b

### Erfindungsgemäßes Verfahren zur Herstellung von α-Isocyanato-methyl-methyldimethoxysilan

Es wird so vorgegangen wie in Beispiel 1b. Allerdings wird anstelle des in Beispielen 1a hergestellten *N*-(3-Trimethoxy-silylpropyl)-*O*-methylcarbamats das in Beispiel 3a hergestellte N-(Methyldimethoxysilylmethyl)-*O*-methylcarbamat verwendet. Alle anderen Reaktionsparameter bleiben unverändert.

Es werden 218 g kondensierte Silanmischung erhalten. Die farblose Flüssigkeit wird gaschromatographisch analysiert. Sie enthält 60,4% α-Isocyanatomethyl-methyldimethoxysilan, 39,2% *N-*(Methyldimethoxysilylmethyl)-*O*-methylcarbamat und 0,2% Methanol.

### Vergleichsbeispiel 4b

### Nicht erfindungsgemäßes Verfahren zur Herstellung von α-Isocyanatomethyl-methyldimethoxysilan

Es wird so vorgegangen wie in Beispiel 3b. Allerdings wird anstelle des in Beispielen 3a hergestellten N-(Methyldimethoxy-silylmethyl)-*O*-methylcarbamat das in Vergleichsbeispiel 4a hergestellte Produkt verwendet. Alle anderen Reaktionsparameter bleiben unverändert.

Die Isocyanatosilanherstellung muss ca. 60 Minuten nach Dosierbeginn der Silan-Katalysatormischung abgebrochen werden, weil der Reaktionsdünnschichter auf Grund von Feststoffablagerungen blockiert. Es wird nur eine geringe Menge Silankondensat erhalten, die nicht weiter analysiert wird.

### Vergleichsbeispiel 4c

### Nicht erfindungsgemäßes Verfahren zur Herstellung von α-Isocyanatomethyl-methyldimethoxysilan

Es wird so vorgegangen wie in Beispiel 3b. Allerdings wird anstelle des in Beispielen 3a hergestellten N-(Methyldimethoxy-silylmethyl)-*O*-methylcarbamat ein käuflich erhältliches *N-*(Methyldimethoxysilylmethyl)-*O*-methylcarbamat verwendet (erhältlich unter der Bezeichnung GENIOSIL® XL 65 bei der Wacker Chemie AG, D-München). Dabei handelt es sich um eine Produktqualität, bei der das N-(Methyldimethoxysilylmethyl)-*O-*methylcarbamat nach seiner Synthese durch eine apparativ aufwendige Dünnschichtung destillativ aufgereinigt worden ist, wobei sämtliche schwersiedenden Verunreinigungen inklusive aller Salzspuren entfernt worden sind.

Es werden 220 g kondensierte Silanmischung erhalten. Die farblose Flüssigkeit wird gaschromatographisch analysiert. Sie enthält 58,9% aus α-Isocyanatomethyl-methyldimethoxysilan, 40,3% *N*-(Methyldimethoxysilylmethyl)-*O*-methylcarbamat und 0,2% Methanol.

## Patentansprüche

1. Verfahren zur Herstellung von Isocyanatoorganosilanen (IS) der allgemeinen Formel (4)
OCN-R²-SiR³₍₃₋ₓ₎(OR⁴)ₓ (4),
ausgehend von Carbamatoorganosilanen (CS) der allgemeinen Formel (5) 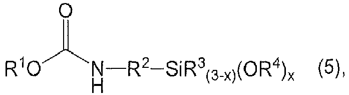 bei dem Carbamatoorganosilane (CS) eingesetzt werden, die durch Umsetzung von mindestens einem Aminoorganosilan (AS) der allgemeinen Formel (6),
NH₂-R²-SiR³₍₃₋ₓ₎(OR⁴)ₓ (6),
mit mindestens einem Dialkylcarbonat (DAC) der allgemeinen Formel (7), 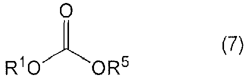 in Gegenwart eines basische Funktionen aufweisenden basischen Katalysators (K) hergestellt wurden, wobei der basische Katalysator (K), der ein Metallalkoholat ist, vor der Herstellung der Isocyanatoorganosilane (IS) vollständig oder teilweise mit einer Säure (S) neutralisiert wurde, deren sämtliche Protolysenstufen pKₛ-Werte von maximal 4,0 aufweisen, wobei die Säure ausgewählt wird aus Chlorwasserstoff, schwefelhaltigen Säuren, Salpetriger Säure und Salpetersäure, wobei
R¹, R³, R⁴ und R⁵ gleich oder verschieden sein können und jeweils einen einwertigen, unsubstituierten oder substituierten Kohlenwasserstoffrest darstellen,
R² einen zweiwertigen, unsubstituierten oder substituierten Kohlenwasserstoffrest darstellt, und
x einen Wert 1, 2 oder 3 bedeutet.

2. Verfahren nach Anspruch 1, bei dem bei der vollständigen oder teilweisen Neutralisation die Säure (S) in einer Menge zugegeben wird, dass auf ein Mol basischer Funktionen im Katalysator (K) 0,9 bis 5 Mol saure Wasserstoffe kommen.

3. Verfahren nach einem oder mehreren der vorangehenden Ansprüche, bei dem R¹ einen Alkylrest mit 1 oder 4 Kohlenstoffatomen bedeutet.

4. Verfahren nach einem oder mehreren der vorangehenden Ansprüche, bei dem R⁵ einen Alkylrest mit 1 oder 4 Kohlenstoffatomen bedeutet.

5. Verfahren nach einem oder mehreren der vorangehenden Ansprüche, bei dem sämtliche Reste R⁴, R¹ und R⁵ identisch sind.

6. Verfahren nach einem oder mehreren der vorangehenden Ansprüche, bei dem das Neutralisationsprodukt aus dem Katalysator (K) und der Säure (S) bei 20°C fest ist und vom Dialkylcarbonat (DAC) der allgemeinen Formel (7) nicht abgetrennt wird.

## Claims

1. Process for preparing isocyanatoorganosilanes (IS) of the general formula (4)
OCN-R²-SiR³₍₃₋ₓ₎(OR⁴)ₓ (4),
from carbamatoorganosilanes (CS) of the general formula (5) 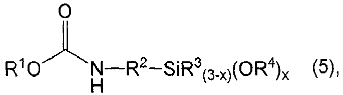 wherein carbamatoorganosilanes (CS) which have been prepared by reaction of at least one aminoorganosilane (AS) of the general formula (6),
NH₂-R²-SiR³₍₃₋ₓ₎(OR⁴)ₓ (6),
with at least one dialkyl carbonate (DAC) of the general formula (7), 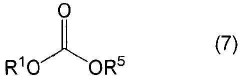 in the presence of a basic catalyst (K) having basic functions which is a metal alkoxide, where the basic catalyst (K) has been completely or partially neutralized with an acid (S) all of whose protolysis stages have pKₐ values of not more than 4.0 before preparation of the isocyanatoorganosilanes (IS), are used,
where the acid is selected from among hydrogen chloride, sulfur-containing acids, nitrous acid and nitric acid,
where
R¹, R³, R⁴ and R⁵ can be identical or different and are each a monovalent, unsubstituted or substituted hydrocarbon radical,
R² is a divalent, unsubstituted or substituted hydrocarbon radical and
x is 1, 2 or 3.

2. Process according to Claim 1, wherein the acid (S) is added in the complete or partial neutralization in such an amount that from 0.9 to 5 mol of acidic hydrogens are present per 1 mol of basic functions in the catalyst (K).

3. Process according to one or more of the preceding claims, wherein R¹ is an alkyl radical having 1 or 4 carbon atoms.

4. Process according to one or more of the preceding claims, wherein R⁵ is an alkyl radical having 1 or 4 carbon atoms.

5. Process according to one or more of the preceding claims, wherein all radicals R⁴, R¹ and R⁵ are identical.

6. Process according to one or more of the preceding claims, wherein the neutralization product of the catalyst (K) and the acid (S) is solid at 20°C and is not separated off from the dialkyl carbonate (DAC) of the general formula (7).

## Revendications

1. Procédé de fabrication d'isocyanato-organosilanes (IS) de formule générale (4)
OCN-R²-SiR³₍₃₋ₓ₎(OR⁴)ₓ (4),
à partir de carbamato-organosilanes (CS) de formule générale (5) 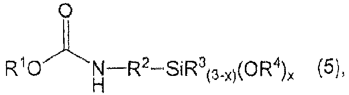 selon lequel des carbamato-organosilanes (CS) sont utilisés, qui ont été fabriqués par mise en réaction d'au moins un amino-organosilane (AS) de formule générale (6)
NH₂-R²-SiR³₍₃₋ₓ₎(OR⁴)ₓ (6)
avec au moins un carbonate de dialkyle (DAC) de formule générale (7) 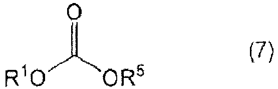 en présence d'un catalyseur basique (K) comprenant des fonctions basiques, le catalyseur basique (K), qui est un alcoolate de métal, ayant été neutralisé en totalité ou en partie avant la fabrication des isocyanatoorganosilanes (IS) avec un acide (S), dont toutes les étapes de protolyse présentent des valeurs pKₛ d'au plus 4,0, l'acide étant choisi parmi le chlorure d'hydrogène, les acides contenant du soufre, l'acide nitreux et l'acide nitrique,
R¹, R³, R⁴ et R⁵ pouvant être identiques ou différents, et représentant chacun un radical hydrocarboné monovalent, non substitué ou substitué,
R² représentant un radical hydrocarboné bivalent, non substitué ou substitué, et
x signifiant une valeur de 1, 2 ou 3.

2. Procédé selon la revendication 1, selon lequel, lors de la neutralisation totale ou partielle, l'acide (S) est ajouté en une quantité telle que 0,9 à 5 moles d'hydrogènes acides soient présents pour une mole de fonctions basiques dans le catalyseur (K).

3. Procédé selon une ou plusieurs des revendications précédentes, selon lequel R¹ signifie un radical alkyle contenant 1 ou 4 atomes de carbone.

4. Procédé selon une ou plusieurs des revendications précédentes, selon lequel R⁵ signifie un radical alkyle contenant 1 ou 4 atomes de carbone.

5. Procédé selon une ou plusieurs des revendications précédentes, selon lequel tous les radicaux R⁴, R¹ et R⁵ sont identiques.

6. Procédé selon une ou plusieurs des revendications précédentes, selon lequel le produit de neutralisation du catalyseur (K) et de l'acide (S) est solide à 20 °C et n'est pas séparé du carbonate de dialkyle (DAC) de formule générale (7).
